# EUROPEAN PATENT SPECIFICATION

(11) **EP 1 840 396 B1**
(45) Date of publication and mention of the grant of the patent: **18.08.2010**
(21) Application number: 07006184.1
(22) Date of filing: 26.03.2007
(51) Int. Cl.: F16C 33/66, F16C 29/06

(54) **Lubricant supply apparatus**
Schmiermittelzufuhrvorrichtung
Appareil de fourniture de lubrifiant

(30) Priority: 28.03.2006 KR 20060028044
(43) Date of publication of application: 03.10.2007
(73) Proprietor: SBC Linear Co.,Ltd., 45-20, Yoido-dong, Yeoungdeungpo-ku Seoul 150-891 (KR)
(72) Inventor: Lee, Jin-Kwoan, Seoul 158-768 (KR); Lee, Yong-Jae, Seoul 158-075 (KR)
(74) Representative: Winter, Brandl, Fürniss, Hübner, Röss, Kaiser, Polte - Partnerschaft

(56) References cited:
- EP-A- 0 950 465
- EP-A- 1 005 953
- JP-A- 2004 003 544
- US-A1- 2006 029 303

## Description

### BACKGROUND OF THE INVENTION

### Field of the Invention

The present invention relates to a lubricant supply apparatus, which supplies lubricant to the surface of a guide rail in a linear guide system, such as an LM guide, in which a slider is movably assembled with the guide rail using bearings, such as balls or rollers, interposed between the slider and the guide rail, and slides along the guide rail.

Such a lubricant supply apparatus is known from US 2006/0029303 A.

### Description of the Related Art

Korean Patent Laid-Open Publication Nos. 1999-0077158, 1999-0083217, and 2000-0047861 disclose conventional lubricant supply apparatuses.

The lubricant supply apparatus, which is disclosed in Korean Patent Laid-Open Publication No. 1999-0077158, is installed on a slider, which is movably seated on a guide rail using bearings, and supplies lubricant to the surface of the guide rail while the slider moves relative to the guide rail. The lubricant supply apparatus comprises: a lubricant application unit, which is in contact with the guide rail and applies lubricant to the guide rail; a lubricant storage unit, which is placed adjacent to the lubricant application unit, absorbs and stores lubricant therein, and supplies lubricant to the lubricant application unit; and a flow rate control unit, which controls the rate of flow of lubricant supplied from the lubricant storage unit to the lubricant application unit. Both the lubricant application unit and the lubricant storage unit are housed in a casing, which is installed on the slider and mounts the lubricant supply apparatus to the slider.

However, the above-mentioned lubricant supply apparatus is problematic in that the lubricant application unit is in contact only with the bearing rolling grooves of the guide rail, so that an insufficient amount of lubricant may be supplied to the surface of the guide rail, or no lubricant may flow from the lubricant storage unit to the lubricant application unit.

Further, a base plate, which is made of a steel plate, is installed in the casing, and the flow rate control unit is made of a stainless steel plate. Thus, the base plate must be integrated with the casing through a complex process, and, due to the steel plates, the lubricant supply apparatus is heavy and cannot be made to have a compact structure.

Further, the casing is a slim elastic body, so that, when the casing is locked to the slider using locking bolts, a plurality of bosses, which have a hollow pipe shape, must be provided on the casing to prevent deformation of the elastic casing.

Each of the lubricant supply apparatuses, which are disclosed in Korean Patent Laid-Open Publication Nos. 1999-0083217 and 2000-0047861, is installed on a slider, which is movably seated on a guide rail using bearings, and supplies lubricant to the surface of the guide rail while the slider moves relative to the guide rail. The lubricant supply apparatus comprises: a casing, which is fixed to the slider; a plurality of lubricant application pieces, which protrude from the casing at predetermined positions such that the lubricant application pieces come into contact with the guide rail and apply lubricant to the guide rail; and a lubricant storage chamber provided in the casing to supply lubricant to the lubricant application pieces, wherein the plurality of lubricant application pieces are grouped into several groups, each group comprising one lubricant application piece or two neighboring lubricant application pieces, and, further, a lubricant storage chamber is provided for each of the lubricant application piece groups.

However, the above-mentioned lubricant supply apparatus is problematic in that the apparatus has an excessive number of lubricant application pieces, thus complicating the process of assembling the apparatus.

Further, a plurality of partition walls must be provided in the casing to isolate the lubricant application pieces from each other, so that it may be difficult to form locking holes, which are required to mount the casing of the lubricant supply apparatus to the slider, in the casing.

Another disadvantage of the lubricant supply apparatus resides in that a plurality of bosses must be provided on the casing through a complex process.

### SUMMARY OF THE INVENTION

Accordingly, the present invention has been made keeping in mind the above problems occurring in the related art, and an object of the present invention is to provide a lubricant supply apparatus, which supplies lubricant both to the bearings and to the surface of the guide rail of a linear guide system, thus greatly extending the maintenance period of the linear guide system and enabling highly precise linear movement of the linear guide system for a lengthy period of time.

In order to achieve the above object, according to one aspect of the present invention, there is provided a lubricant supply apparatus according to claim 1.

The lubricant supply apparatus having the above-mentioned construction can reliably supply a constant amount of lubricant both to the bearings and to the surface of the guide rail, thereby greatly extending the maintenance period of a linear guide system and enabling highly precise linear movement of the linear guide system for a lengthy period of time.

In the lubricant supply apparatus, the casing is preferably configured as a plastic body impregnated with lubricant, and is preferably able to contact the upper surface and/or the opposite side surfaces of the guide rail. Thus, the casing has a sealed and anti-vibration structure, so that the lubricant supply apparatus can minimize the leakage of lubricant from its interior to the atmosphere and prevent the introduction of foreign substances into the slider.

Further, the partition plate may be integrally provided with a plurality of bushings, each having an anti-deformation protrusion to prevent deformation of the casing during the process of mounting the casing to the slider. In this case, the present invention does not require an additional process of assembling separate bushings with the lubricant supply apparatus.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a perspective view illustrating a lubricant supply apparatus according to an embodiment of the present invention, which is used in a linear guide system;
FIG. 2 is an exploded perspective view of FIG. 1;

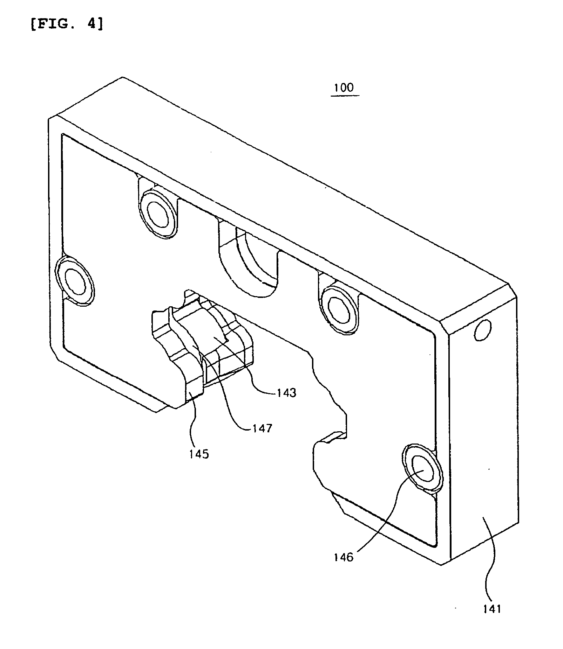

FIG. 3 and FIG. 4 are perspective views illustrating the exploded parts and assembled parts, respectively, of the lubricant supply apparatus according to the embodiment of the present invention;
FIG. 5 is a front view illustrating contact parts between a guide rail and a first lubricant application unit of the lubricant supply apparatus according to the embodiment of the present invention;
FIG. 6 is a front view illustrating contact parts between the guide rail and a second lubricant application unit of the lubricant supply apparatus according to the embodiment of the present invention; and
FIG. 7 is a side sectional view of the lubricant supply apparatus according to the embodiment of the present invention.

### DETAILED DESCRIPTION OF THE INVENTION

Reference will now be made in greater detail to a preferred embodiment of the invention, an example of which is illustrated in the accompanying drawings. Wherever possible, the same reference numerals will be used throughout the drawings and the description to refer to the same or like parts.

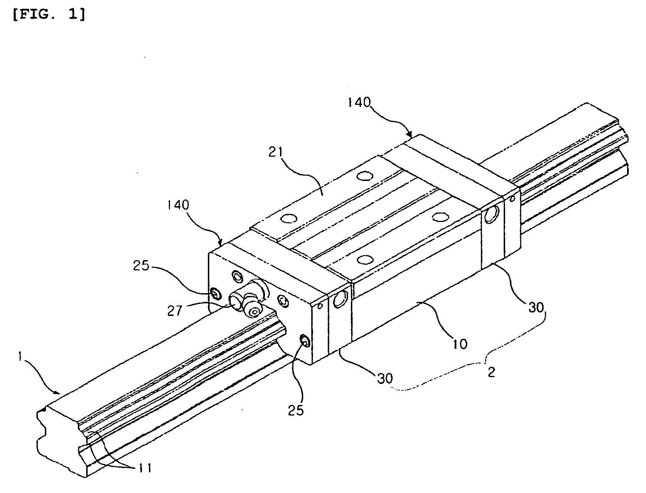

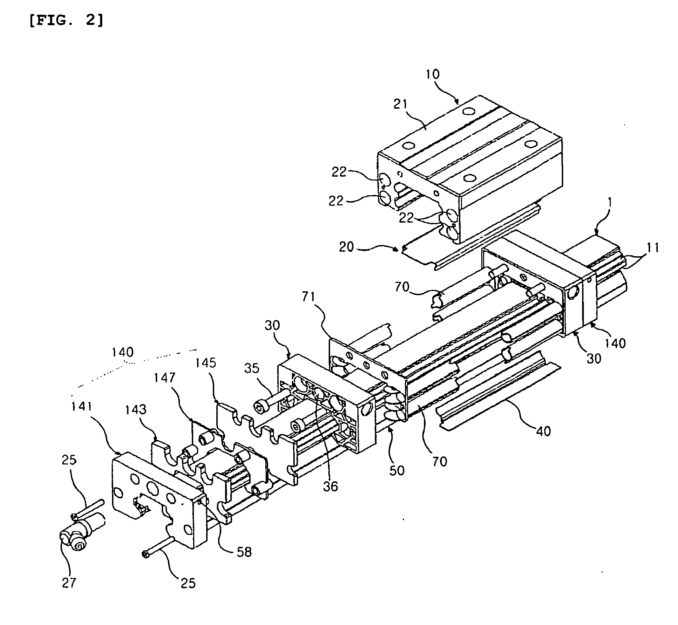

FIG. 1 is a perspective view illustrating a lubricant supply apparatus according to an embodiment of the present invention, which is used in a linear guide system. FIG. 2 is an exploded perspective view of FIG. 1.

As shown in FIG. 1 and FIG. 2, the linear guide system according to the embodiment of the present invention comprises: a guide rail 1, with a plurality of bearing rolling grooves 11 longitudinally formed along opposite side surfaces of the guide rail 1; a slider 2, which is movably fitted over the guide rail 1, with a plurality of balls interposed between the guide rail 1 and the slider 2 and functioning as bearings, and is provided with an endless ball circulation path therein; and a lubricant supply apparatus 140, which is mounted to each of the front and rear ends of the slider 2 and supplies lubricant on the surface of the guide rail 1 while the slider 2 moves along the guide rail 1.

Further, the slider 2 comprises: a saddle-type block body 10, which is provided with both a machine mounting surface 21 for mounting a machine, such as a table, to the slider 2 and a plurality of unloaded ball paths 22 for circulating the balls; and an end plate 30 mounted to each of the front and rear ends of the block body 10.

Each of the end plates 30, which are mounted to the front and rear ends of the block body 10, is provided with a ball direction changing path (not shown) to pass the balls from the bearing rolling grooves 11 of the guide rail 1 to the unloaded ball paths 22 of the block body 1. The end plates 30 are mounted to the block body 10 using a plurality of locking bolts 35, so that the endless ball circulation path is defined in the slider 2 by the ball direction changing path and the unloaded ball paths 22.

In the above state, to reduce the friction between the balls, the linear guide system preferably further comprises: a pipe 70, which is inserted into each of the unloaded ball paths 22; a ball circulation member 50; and a support plate 71, which connects the pipes 70 to the ball circulation member 50 and supports the pipes 70 and the ball circulation member 50.

Further, each of the end plates 30 is provided with an oil supply hole 36 to supply lubricant to the endless ball circulation path. An oil supply nipple 27 is mounted to the oil supply hole 36 such that the nipple 27 is exposed outside the lubricant supply apparatus 140.

Further, as shown in FIG. 2, the slider 2 is provided with an upper ball retainer 20 and a lower ball retainer 40 to support the balls in the upper and lower parts of the slider 2. For a description of the upper and lower ball retainers, reference may be made to Korean Registered Patent No. 496893.

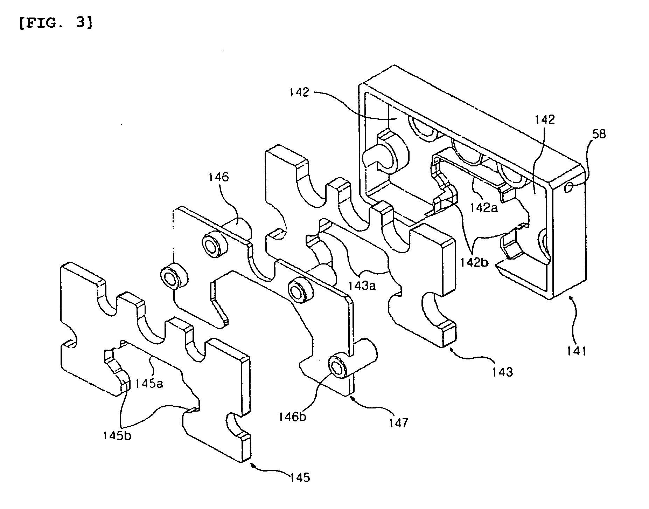

Meanwhile, as shown in FIG. 2 and FIG. 3, the lubricant supply apparatus 140 comprises: a first lubricant application unit 143; a second lubricant application unit 145; a partition plate 147, which isolates the first lubricant application unit 143 from the second lubricant application unit 145; and a casing 141, which is mounted to each of the front and rear ends of the slider 2 and receives the first lubricant application unit 143, the second lubricant application unit 145 and the partition plate 147 in a storage chamber 142 thereof.

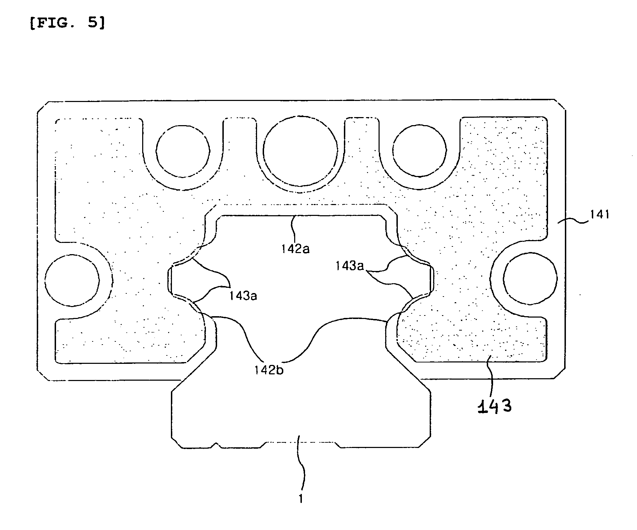

As shown in FIG. 5, the first lubricant application unit 143 is provided with a fitting recess, at which the first lubricant application unit 143 is movably fitted over the guide rail 1, and which is provided with a plurality of contact surfaces 143a to be in contact with respective bearing rolling grooves 11 of the guide rail 1.

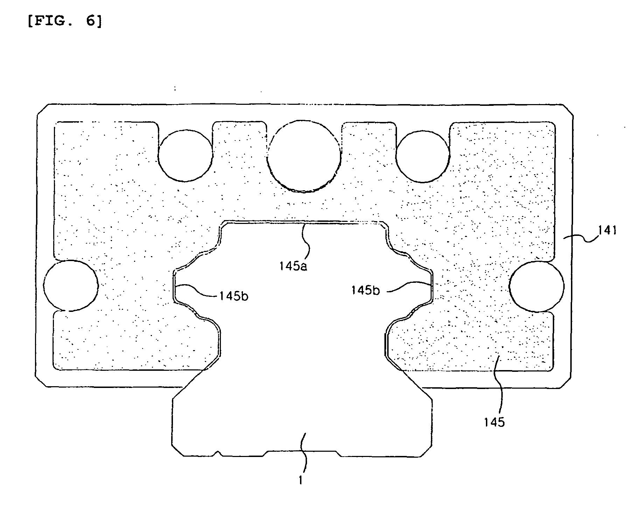

As shown in FIG. 6, the second lubricant application unit 145 is provided with a fitting recess, at which the second lubricant application unit 145 is movably fitted over the guide rail 1, and which is provided with one upper contact surface 145a and two side contact surfaces 145b which are in contact with the surface of the guide rail 1.

In the present invention, each of the first lubricant application unit 143 and the second lubricant application unit 145 is required to evenly apply lubricant onto the guide rail 1, so that the first lubricant application unit 143 and the second lubricant application unit 145 is preferably made of a material that easily transfers the lubricant using a capillary phenomenon, for example, a tangled body of fibers, such as felt, having low porosity.

Due to both the first lubricant application unit 143 and the second lubricant application unit 145, a constant amount of lubricant can be reliably supplied both to the bearings and to the surface of the guide rail 1.

The casing 141 is mounted to the end plate 30 using locking bolts 25. The casing 141 is configured as a plastic body impregnated with lubricant.

The casing 141 is also provided with a fitting recess, at which the casing 141 is movably fitted over the guide rail 1. The fitting recess of the casing 141 is preferably provided with one upper contact surface 142a and/or two side contact surfaces 142b which are in contact with the surface of the guide rail 1.

The casing 141 has a sealed and anti-vibration structure, which receives the first lubricant application unit 143, the second lubricant application unit 145 and the partition plate 147 in the storage chamber 142 thereof, so that the casing 141 can minimize the leakage of lubricant from its interior to the atmosphere and prevent the introduction of foreign substances into the slider 2 while providing a compact appearance to the slider 2 having the lubricant supply apparatus 140 and enabling the highly precise motion of parts, and executing reliable lubrication for a lengthy period of time.

In the casing 141, the upper contact surface 142a and the side contact surfaces 142b function as sealing surfaces for sealing the surface of the guide rail 1, and are configured as strip-type flanges, which form part of walls of the storage chamber 142, so that the upper and side contact surfaces 142a and 142b determine the locations of the first lubricant application unit 143, the second lubricant application unit 145 and the partition plate 147, and support them in the storage chamber 142.

Further, the partition plate 147 is preferably made of a plastic material, so that the first lubricant application unit 143 and the second lubricant application unit 145 can be maintained in their parallel states without being tangled, regardless of frictional contact with the guide rail 1, thus evenly applying lubricant onto the surface of the guide rail 1.

Further, as shown in FIG. 3, the partition plate 147 is preferably and integrally provided with a plurality of bushings 146, each having two anti-deformation protrusions 146a and 146b.

Described in detail, when the casing 141 is mounted to the slider 2, the locking bolts 25 are inserted into the respective bushings 146. The first anti-deformation protrusion 146a, which is provided on the first end of each of the bushings 146, is supported in the casing 141, while the second anti-deformation protrusion 146b, which is provided on the second end of each of the bushings 146, is supported in the end plate 30. Due to the first and second anti-deformation protrusions 146a and 146b of the bushings 146, the casing 141 is prevented from being deformed even when it is compressed. Further, the first and second anti-deformation protrusions 146a and 146b of the bushings 146 can prevent deformation of both the first lubricant application unit 143 and the second lubricant application unit 145.

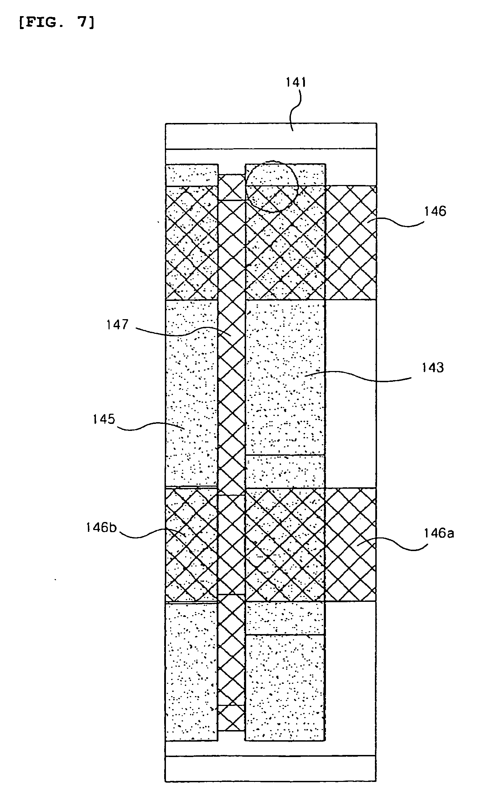

The above-mentioned lubricant supply apparatus 140 will be assembled as follows. As shown in FIG. 7, first, a sufficient amount of lubricant is impregnated in both the first lubricant application unit 143 and the second lubricant application unit 145. Thereafter, the first lubricant application unit 143, the partition plate 147 and the second lubricant application unit 145 are sequentially assembled in the storage chamber 142 of the casing 141. Thereafter, the lubricant supply apparatus 140 is mounted to each of the front and rear ends of the slider 2 using the locking bolts 25, which are inserted into the respective bushings 146.

When most of the lubricant, which was impregnated in both the first lubricant application unit 143 and the second lubricant application unit 145, has been consumed after the passage of time, it becomes necessary to supply new lubricant both to the first lubricant application unit 143 and to the second lubricant application unit 145. In the above state, the new lubricant may be supplied both to the first lubricant application unit 143 and to the second lubricant application unit 145 through an air hole 58 in the casing 141.

As apparent from the above description, the lubricant supply apparatus according to the present invention provides the following advantages.

First, the lubricant supply apparatus according to the present invention comprises a first lubricant application unit, which lubricates the guide rail of a linear guide system while being in contact with a plurality of bearing rolling grooves longitudinally formed along opposite side surfaces of the guide rail, and the second lubricant application unit, which lubricates the guide rail while being in contact with both the upper surface and the opposite side surfaces of the guide rail. Thus, the lubricant supply apparatus can reliably supply a constant amount of lubricant both to the bearings and to the surface of the guide rail, thereby greatly extending the maintenance period of the linear guide system and enabling highly precise linear movement of the linear guide system for a lengthy period of time.

Second, the casing of the lubricant supply apparatus is configured as a plastic body impregnated with lubricant, and is in contact with the upper surface and/or the opposite side surfaces of the guide rail, so that the casing has a sealed and vibration-resistant structure. Thus, the lubricant supply apparatus prevents the introduction of foreign substances into the slider, and minimizes the leakage of lubricant from its interior to the atmosphere while providing a compact appearance to the slider having the lubricant supply apparatus and realizing the highly precise motion of parts, and executing reliable lubrication for a lengthy period of time.

Third, the partition plate is integrally provided with a plurality of bushings, each having an anti-deformation protrusion to prevent deformation of the casing during a process of mounting the casing to the slider. Thus, unlike a conventional lubricant supply apparatus, the present invention does not require an additional process of assembling separate bushings with the lubricant supply apparatus.

## Claims

1. A lubricant supply apparatus (140), which is mountable to a slider (2) movably assembled with a guide rail (1) using bearings, wherein the guide rail (1) comprises an upper surface and opposite side surfaces with a plurality of bearing rolling grooves (11) formed along said opposite side surfaces, wherein the lubricant supply apparatus (140) is able to apply lubricant to a surface of the guide rail (1) while the slider (2) moves relative to the guide rail (1), and comprises:
a first lubricant application unit (143), for contacting with respect to the surfaces of the guide rail (1) only the plurality of bearing rolling grooves (11) formed along the opposite side surfaces of the guide rail (1);
a second lubricant application unit (145), for contacting both the upper surface and the opposite side surfaces of the guide rail (1);
a partition plate (147), which isolates the first lubricant application unit (143) from the second lubricant application unit (145); and
a casing (141), which is mountable to each of front and rear ends of the slider (2) and receives the first lubricant application unit (143), the partition plate (147) and the second lubricant application unit (145) therein.

2. The lubricant supply apparatus according to claim 1, wherein the casing (141) is configured as a plastic body impregnated with lubricant, and is able to contact the upper surface of the guide rail (1).

3. The lubricant supply apparatus according to claim 2, wherein the casing (141) is also able to contact the opposite side surfaces of the guide rail (1).

4. The lubricant supply apparatus according to claim 2 or 3, wherein the partition plate (147) is integrally provided with a plurality of bushings (146), each having an anti-deformation protrusion (146a, 146b) to prevent deformation of the casing (141) during a process of mounting the casing (141) to the slider (2).

## Patentansprüche

1. Gleitmittelzuführvorrichtung (140), die an einem Gleitstück (2) montierbar ist, das unter Verwendung von Lagern beweglich an einer Führungsleiste (1) montiert ist, wobei die Führungsleiste (1) eine obere Fläche und gegenüberliegende Seitenflächen mit einer entlang der gegenüberliegenden Seitenflächen ausgebildeten Vielzahl an Wälzlagerrillen (11) umfasst, wobei die Gleitmittelzuführvorrichtung (140) in der Lage ist, Gleitmittel auf eine Fläche der Führungsleiste (1) aufzubringen, während das Gleitstück (2) sich relativ zu der Führungsleiste (1) bewegt, und umfasst:
eine erste Gleitmittelaufbringeinheit (143), um in Bezug auf die Flächen der Führungs!eiste (1) lediglich die entlang der gegenüberliegenden Seitenflächen der Führungsleiste (1) ausgebildete Vielzahl an Wälzlagerrillen (11) zu kontaktieren;
eine zweite Gleitmittelaufbringeinheit (145), um sowohl die obere Fläche als auch die gegenüberliegenden Seitenflächen der Führungsleiste (1) zu kontaktieren;
eine Trennplatte (147), die die erste Gleitmittelaufbringeinheit (143) von der zweiten Gleitmittelaufbringeinheit (145) isoliert; und
ein Gehäuse (141), das an jedem der vorderen und hinteren Enden des Gleitstücks (2) montierbar ist und darin die erste Gleitmittelaufbringeinheit (143), die Trennplatte (147) und die zweite Gleitmittelaufbringeinheit (145) aufnimmt.

2. Gleitmittelzuführvorrichtung nach Anspruch 1, wobei das Gehäuse (141) als ein mit einem Gleitmittel imprägnierter Kunststoffkörper ausgestaltet ist und in der Lage ist, die obere Fläche der Führungsleiste (1) zu kontaktieren.

3. Gleitmittelzuführvorrichtung nach Anspruch 2, wobei das Gehäuse (141) in der Lage ist, die gegenüberliegenden Seitenflächen der Führungsleiste (1) zu kontaktieren.

4. Gleitmittelzuführvorrichtung nach Anspruch 2 oder 3, wobei die Trennplatte (147) integral mit einer Vielzahl an Buchsen (146) bereitgestellt ist, wobei jede einen Antideformationsvorsprung (146a, 146b) aufweist, um eine Deformation des Gehäuses (141) während eines Verfahrens des Befestigens des Gehäuses (141) an dem Gleitstück (2) zu verhindern.

## Revendications

1. Appareil d'alimentation en lubrifiant (140), qui peut être monté sur une glissière (2) assemblée de manière mobile avec un rail de guidage (1) en utilisant des paliers, où le rail de guidage (1) comprend une surface supérieure et des surfaces latérales opposées avec une pluralité de rainures (11) de roulements à paliers formées le long desdites surfaces latérales opposées, où l'appareil d'alimentation en lubrifiant (140) est capable d'appliquer du lubrifiant à une surface du rail de guidage (1) pendant que la glissière (2) se déplace par rapport au rail de guidage (1), et comprend :
une première unité (143) d'application de lubrifiant, destinée à ne rentrer en contact, par rapport aux surfaces du rail de guidage (1), qu'avec la pluralité de rainures (11) de roulements à paliers formées le long des surfaces latérales opposées du rail de guidage (1) ;
une deuxième unité (145) d'application de lubrifiant, destinée à rentrer en contact avec la surface supérieure et les surfaces latérales opposées du rail de guidage (1) ;
une plaque de partition (147), qui isole la première unité (143) d'application de lubrifiant de la deuxième unité (145) d'application de lubrifiant; et
un boîtier (141), qui peut être monté sur chacune des extrémités avant et arrière de la glissière (2) et qui reçoit dedans la première unité (143) d'application de lubrifiant, la plaque de partition (147) et la deuxième unité (145) d'application de lubrification.

2. Appareil d'alimentation en lubrifiant selon la revendication 1, dans lequel le boîtier (141) est configuré comme un corps en plastique imprégné de lubrifiant, et est capable de rentrer en contact avec la surface supérieure du rail de guidage (1).

3. Appareil d'alimentation en lubrifiant selon la revendication 2, dans lequel le boîtier (141) est également capable de rentrer en contact avec les surfaces latérales opposées du rail de guidage (1).

4. Appareil d'alimentation en lubrifiant selon la revendication 2 ou 3, dans lequel la plaque de partition (147) est intégralement pourvue avec une pluralité de douilles (146), chacune ayant une saillie anti-déformation (146a, 146b) pour empêcher une déformation du boîtier (141) durant un processus de montage du boîtier (141) sur la glissière (2).
